# EUROPÄISCHE PATENTSCHRIFT

(11) **EP 4 384 816 B1**
(45) Veröffentlichungstag und Bekanntmachung des Hinweises auf die Patenterteilung: **29.04.2026**
(21) Anmeldenummer: 22738648.9
(22) Anmeldetag: 30.06.2022
(51) Int. Cl.: G01N 27/622, G01N 27/64

(54) **IONENMOBILITÄTSSPEKTROMETER**
ION MOBILITY SPECTROMETER
SPECTROMÈTRE À MOBILITÉ IONIQUE

(30) Priorität: 10.08.2021 DE 102021120720
(43) Veröffentlichungstag der Anmeldung: 19.06.2024
(73) Patentinhaber: G.A.S. Gesellschaft für analytische Sensorsysteme mbH, 44227 Dortmund (DE)
(72) Erfinder: GROSSE BLEY, Andre, 44892 Bochum (DE); SANDERS, Daniel, 45470 Mühlheim an der Ruhr (DE); SIRKECI, Cengiz, 59192 Bergkamen (DE)
(74) Vertreter: Schneiders & Behrendt Bochum
(86) Internationale Anmeldenummer: PCT/EP2022/068189
(87) Internationale Veröffentlichungsnummer: WO 2023/016699

(56) Entgegenhaltungen:
- DE-A1- 10 200 256
- DE-A1- 102008 029 555
- US-A- 4 633 083
- US-B1- 9 147 565

## Beschreibung

Die Erfindung betrifft ein Ionenmobilitätsspektrometer mit einem rohrförmigen Ionisierungsraum mit einem Probengaseinlass und einem Gasauslass und mit einer innerhalb des Ionisierungsraumes angeordneten Ionisierungseinrichtung sowie mit einem rohrförmigen Driftraum, welcher durch ein Ionengitter vom Ionisierungsraum getrennt ist, wobei der Driftraum am dem Ionengitter abgewandten Ende einen Ionendetektor und einen Driftgaseinlass aufweist, wobei die Ionisierungseinrichtung an der Stirnseite eines im Ionisierungsraum angeordneten, zylinderförmigen Strömungskörpers angeordnet ist.

Solche Ionenmobilitätsspektrometer (IMS) sind gegenwärtig ausgelegt auf eine maximale Ionisierung und damit hohe Sensitivität. Damit einher geht eine lange Verweilzeit der Probe im Ionisierungsraum des Ionenmobilitätsspektrometers. Dies führt bei modernen Systemen mit vorgeschalteter gaschromatographischer Trennung (GC) unweigerlich zu einer Verbreiterung der detektierten Signale (Abklingen des Ausspülens aus dem Ionisierungsraum des Ionenmobilitätsspektrometers, in dem die in der gaschromatographischen Trennsäule getrennten Substanzen hinein eluieren). Daraus resultiert eine verschlechterte gaschromatographische Trennung. Ein Ionenmobilitätsspektrometer mit den Merkmalen des Oberbegriffs des Anspruchs 1 ist aus US 5 021 654 A bekannt.

Aus DE 10 2008 029 555 A1 und US 4 633 083 A sind weitere Ionenmobilitätsspektrometer ohne zylinderförmigen Strömungskörper bekannt.

Aufgabe der Erfindung ist es, ein Ionenmobilitätsspektrometer zu schaffen, das in Verbindung mit einer gaschromatographischen Vortrennung eine gute gaschromatographische Auflösung sicherstellt.

Diese Aufgabe wird bei einem Ionenmobilitätsspektrometer der eingangs bezeichneten Art erfindungsgemäß dadurch gelöst, dass die Ionisierungseinrichtung eine flächige Kontaktoberfläche aufweist, welche parallel und in einem geringen Abstand zum Ionengitter quer zur Längsachse des Ionisierungsraumes ausgerichtet ist, wobei der Probengaseinlass eine Probengaszuleitung aufweist, deren Probenabgabeende unmittelbar im Bereich der Kontaktoberfläche der Ionisierungseinrichtung mündet.

Durch die Probenzuführung direkt bzw. unmittelbar in den Ionisierungsbereich des Ionenmobilitätsspektrometers und durch die den Strömungskörper bewirkte Driftgasführung kann die Verweilzeit der eluierenden Probe gezielt verkürzt bzw. optimiert werden. Mit der Verkürzung der Verweilzeit kann eine gute gaschromatographische Auflösung sichergestellt werden, so dass die Vorteile der Kopplung einer gaschromatographischen Vortrennung und eines Ionenmobilitätsspektrometers voll zum Tragen kommen.

Daneben kann bei sehr hohen Driftgas- zu Probengasverhältnissen eine gezielte Verminderung der Sensitivität des Ionendetektors erreicht werden. Dies bedingt eine Abflachung der Kalibrierkurve (detektiertes Substanzsignal vs. Konzentration), so dass der - IMS-Prinzip bedingte - maximal detektierbare Konzentrationsbereich deutlich nach oben verschoben werden kann. Diese Sättigung des Detektors bzw. dessen geringer dynamische Bereich stellt oftmals eine Anwendungseinschränkung in zahlreichen analytischen Applikationen dar, was durch die Erfindung signifikant verbessert wird.

Die senkrecht zur Driftröhre angeordnete flächige Kontaktoberfläche der Ionisierungseinrichtung und der geringe Abstand zum elektronischen Ionengitter führen ferner zu einer optimierten IMS-Auflösung. In Kombination mit der verbesserten GC-Auflösung ist es damit typischerweise möglich, komplexe Substanzgemische in kürzerer Messzeit oder mit verbesserter analytischer Auflösung zu analysieren. Dies ist für analytische Messaufgaben vorteilhaft.

Durch die Gestaltung des Ionenmobilitätsspektrometers gibt es außerdem kein Totvolumen an der Ionisierungseinrichtung und dadurch keine Vermischung der in der GC-Säule getrennten Moleküle durch strömungsarme Zonen vor der Ionisierungseinrichtung. Es erfolgt ein direkter Abtransport der Ionen im elektrischen Feld und im Driftgasstrom aus dem Wirkbereich heraus. Außerdem erfolgt eine Zwangsionisierung durch Überströmen der aktiven Fläche in Richtung zum Gasauslass.

Besonders bevorzugt ist vorgesehen, dass dem Probengaseinlass und dem Driftgaseinlass jeweils ein Durchflussregler (z.B. electronic pressure controller) zur Regelung des jeweiligen Volumenstromes zugeordnet ist. Dadurch kann der Ionenstrom durch unabhängig voneinander regelbare Volumenströme von Proben- und Driftgas gesteuert werden. Die Größe der Volumenströme ist z.B. über die Firmware des Ionenmobilitätsspektrometers einstellbar.

In konstruktiv bevorzugter Ausgestaltung ist vorgesehen, dass die Probengaszuleitung in den Strömungskörper integriert ist. Alternativ kann die Probengaszuleitung auch getrennt vom Strömungskörper ausgebildet sein.

Dabei kann sich die Probengaszuleitung bevorzugt entlang der Längsachse des Ionisierungsraumes erstrecken.

Ferner kann vorgesehen sein, dass der Strömungskörper ausgehend von der Ionisierungseinrichtung konisch zulaufend ausgebildet ist.

Dabei kann vorteilhaft zusätzlich vorgesehen sein, dass der rohrförmige Ionisierungsraum zum dem Ionengitter abgewandten Ende hin konisch zulaufend ausgebildet ist.

Die Erfindung betrifft auch eine Messeinrichtung mit einem vorbeschriebenen Ionenmobilitätsspektrometer und mit einer mit dem Probengaseinlass des Ionenmobilitätsspektrometers verbundenen gaschromatographischen Vortrennung.

Die Erfindung ist nachstehend anhand der Zeichnung beispielhaft näher erläutert.

Diese zeigt in
- Fig. 1: eine schematische Schnittdarstellung eines Ionenmobilitätsspektrometers nach einer erster Ausgestaltung mit einer gaschromatografischen Vortrennung,
- Fig. 2: eine schematische Schnittdarstellung eines Ionenmobilitätsspektrometers nach einer zweiten Ausgestaltung,
- Fig. 3: eine schematische Schnittdarstellung eines Ionenmobilitätspektrometers nach einer dritten Ausgestaltung,
- Fig. 4: einen Ionisationsraum eines Ionenmobilitätsspektrometers nach einer vierten Ausgestaltung in schematischer Schnittdarstellung und
- Fig. 5: einen Ionisationsraum eines Ionenmobilitätsspektrometers nach einer fünften Ausgestaltung in schematischer Schnittdarstellung.

Ein Ionenmobilitätsspektrometer ist allgemein mit 1 bezeichnet. Dieses Ionenmobilitätsspektrometer 1 weist ein rohrförmiges Gehäuse 2 auf, deren Längsachse mit L bezeichnet ist.

Das Innere des rohrförmigen Gehäuses 2 ist durch ein quer zur Längsachse L angeordnetes Ionengitter 3 in einen rohrförmigen Ionisierungsraum 4 und einen rohrförmigen Driftraum 5 unterteilt.

Der Ionisierungsraum 4 weist einen Probengaseinlass 6 und einen Gasauslass 7 auf, der Driftraum 5 weist einen Driftgaseinlass 8 am dem Ionengitter 3 gegenüberliegenden Ende des Driftraumes 5 auf. Innerhalb des Ionisierungsraumes 4 ist eine Ionisierungseinrichtung 9, z.B. eine UV-Strahlungsquelle oder eine radioaktive Strahlungsquelle, angeordnet.

Am dem Ionengitter 3 abgewandten Ende weist der Driftraum 5 einen Ionendetektor 10 auf, der z.B. aus einer Faraday-Platte und einem vor dieser Faraday-Platte angeordneten Aperturgitter bestehen kann. Entlang der Driftstrecke im Driftraum 5 wird beim Betrieb des Ionenmobilitätsspektrometers ein vorzugsweise homogenes elektrisches Feld aufgebaut, wozu in das Gehäuse 2 integrierte, an eine Spannungsquelle angeschlossene Metallringe 11 vorgesehen sind.

Das insoweit beschriebene Ionenmobilitätsspektrometer 1 ist grundsätzlich bekannt, erfindungsgemäß ist es nun in nachfolgend näher beschriebener Weise ausgebildet, um insbesondere gemeinsam mit einer gaschromatografischen Vortrennung als Messeinrichtung verwendet zu werden.

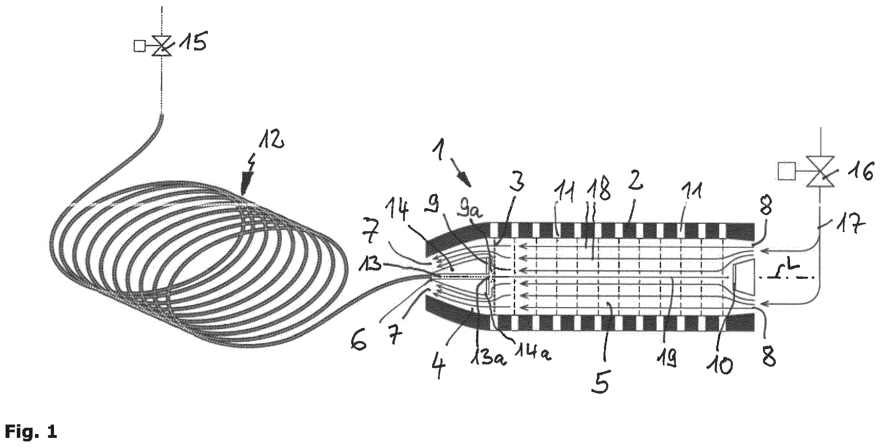

Eine solche gaschromatografische Vortrennung ist in Fig. 1 schematisch in Form einer schlaufenförmig gewickelten Leitung dargestellt und mit 12 bezeichnet. Diese gaschromatografische Vortrennung 12 ist mit dem Probengaseinlass 6 des Ionenmobilitätsspektrometers 1 verbunden.

Die Ionisierungseinrichtung 9 ist an der Stirnseite 14a eines im Ionisierungsraum 4 angeordneten, zylinderförmigen Strömungskörpers 14 angeordnet. Dabei weist die Ionisierungseinrichtung 14 eine flächige Kontaktoberfläche 14a auf, welche in einem geringen Abstand (etwa zwischen 1 mm und 3 mm bei einem Innendurchmesser des Ionisierungsraumes von 15,2 mm) und parallel zum Ionengitter 3 quer zur Längsachse L des Ionisierungsraumes 4 ausgerichtet ist. Ferner ist vorgesehen, dass der Probengaseinlass 6 eine Probengaszuleitung 13 aufweist, deren Probengasabgabeende 13a unmittelbar bzw. direkt im Bereich der Kontaktoberfläche 9a der Ionisierungseinrichtung 9 mündet.

Bei den in den Fig. 1 bis 3 dargestellten Ausführungsformen ist die Probengaszuleitung 13 in den Strömungskörper 14 integriert und erstreckt sich entlang der Längsachse L des Ionisierungsraumes 4. Der Strömungskörper 14 weist vorzugsweise die Längsachse L als Symmetrieachse auf.

Sowohl dem Probengaseinlass 6 als auch dem Driftgaseinlass 8 ist jeweils ein Durchflussregler 15, 16 zur Regelung des jeweiligen Volumenstromes des Probengases bzw. des Driftgases zugeordnet. Dabei ist der vorzugsweise elektronische Durchflussregler 15 in Strömungsrichtung gesehen vor der gaschromatografischen Vortrennung 12 in die entsprechende Zuleitung integriert und der vorzugsweise ebenfalls elektronische Durchflussregler 16 ist in die Driftgaszuleitung 17 integriert, die in den Driftgaseinlass 8 mündet.

Bei der Ausführungsform nach Fig. 1 ist der Strömungskörper 14 ausgehend von der Ionisierungseinrichtung 9 konisch zulaufend ausgebildet, genauso wie der rohrförmige Ionisierungsraum 4 zum dem Ionengitter 3 abgewandten Ende hin. Dadurch ergeben sich Strömungsverhältnisse, die durch Pfeile 18 für den Driftgasstrom und einen Pfeil 19 für den Probenionenstrom im Driftraum 5 dargestellt sind.

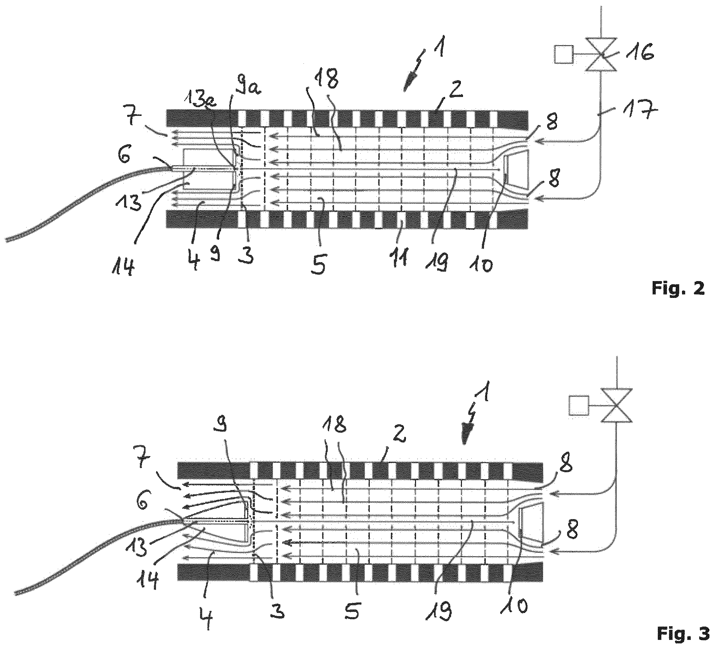

In Fig. 2 ist eine zweite Ausführungsform eines Ionenmobilitätsspektrometers 1 dargestellt, das sich von demjenigen nach Fig. 1 nur dadurch unterscheidet, dass die geometrische Form des Ionisierungsraumes 4 und des Strömungskörpers 14 anders ist, beide sind nämlich bei dieser Ausführungsform zylindrisch ausgebildet. Die gaschromatographische Vortrennung 12 ist in Fig. 2 nicht dargestellt.

Die Ausführungsform nach Fig. 3 unterscheidet sich von derjenigen nach Fig. 1 nur dadurch, dass der Ionisierungsraum 9 zylindrisch ausgebildet ist, der Strömungskörper 14 ist konisch zulaufend ausgebildet.

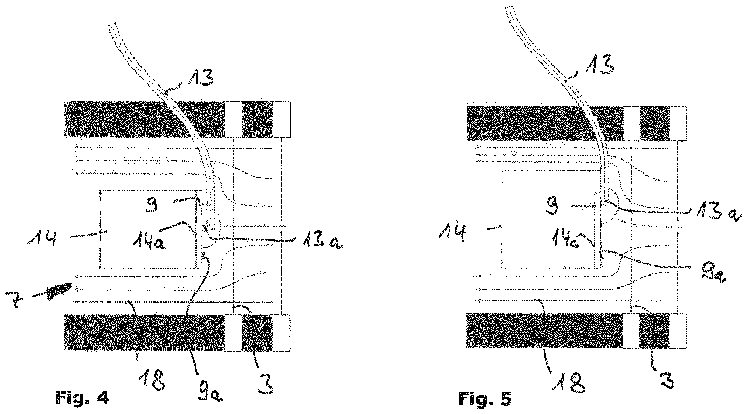

Bei der vierten Ausführungsform nach Fig. 4 ist die Probengaszuleitung anders ausgebildet, sie ist nicht in den Strömungskörper 14 integriert, sondern im Wesentlichen quer zur Längsachse L als Schlauch od. dgl. durch die Wandung des Gehäuses 2 bis in das Zentrum der Kontaktoberfläche nach der Ionisierungseinrichtung 9 geführt.

Die Ausführungsform der Fig. 5 unterscheidet sich von derjenigen nach Fig. 4 nur dadurch, dass die Ionisierungseinrichtung 9 sich nur teilweise über die Stirnseite 14a des Strömungskörpers 14 erstreckt und die Probengaszuleitung 13 an etwas anderer Stelle im Bereich der Kontaktoberfläche 9a der Ionisierungseinrichtung 9 mündet.

### Bezugszeichenliste:

- 1: Ionenmobilitätsspektrometer
- 2: Gehäuse
- 3: Ionengitter
- 4: Ionisierungsraum
- 5: Driftraum
- 6: Probengaseinlass
- 7: Gasauslass
- 8: Driftgaseinlass
- 9: Ionisierungseinrichtung
- 9a: Kontaktoberfläche
- 10: Ionendetektor
- 11: Metallringe
- 12: gaschromatographische Vortrennung
- 13: Probengaszuleitung
- 13a: Probengasabgabeende
- 14: Strömungskörper
- 14a: Stirnseite
- 15: Durchflussregler
- 16: Durchflussregler
- 17: Driftgaszuleitung
- 18: Pfeil
- 19: Pfeil

- L: Längsachse

## Patentansprüche

1. Ionenmobilitätsspektrometer mit einem rohrförmigen Ionisierungsraum (4) mit einem Probengaseinlass (6) und einem Gasauslass (7) und mit einer innerhalb des Ionisierungsraumes (4) angeordneten Ionisierungseinrichtung (8) sowie mit einem rohrförmigen Driftraum (5), welcher durch ein Ionengitter (3) vom Ionisierungsraum (4) getrennt ist, wobei der Driftraum (5) am dem Ionengitter (3) abgewandten Ende einen Ionendetektor (10) und einen Driftgaseinlass (8) aufweist, wobei die Ionisierungseinrichtung (9) an der Stirnseite (14a) eines im Ionisierungsraum (4) angeordneten, zylinderförmigen oder ausgehend von der Ionisierungseinrichtung (9) konisch zulaufenden Strömungskörpers (14), der die Driftgasführung bewirkt, angeordnet ist,
**dadurch gekennzeichnet,**
**dass** die Ionisierungseinrichtung (9) eine flächige Kontaktoberfläche (9a) aufweist, welche parallel und in einem geringen Abstand zum Ionengitter (3) quer zur Längsachse (L) des Ionisierungsraumes (4) ausgerichtet ist, wobei der Probengaseinlass (6) eine Probengaszuleitung (13) aufweist, deren Probenabgabeende (13a) unmittelbar im Bereich der Kontaktoberfläche (9a) der Ionisierungseinrichtung (9) mündet.

2. Ionenmobilitätsspektrometer nach Anspruch 1,
**dadurch gekennzeichnet,**
**dass** dem Probengaseinlass (6) und dem Driftgaseinlass (8) jeweils ein Durchflussregler (15,16) zur Regelung des jeweiligen Volumenstromes zugeordnet ist.

3. Ionenmobilitätsspektrometer nach Anspruch 1 oder 2,
**dadurch gekennzeichnet,**
**dass** die Probengaszuleitung (13) in den Strömungskörper (14) integriert ist.

4. Ionenmobilitätsspektrometer nach Anspruch 3,
**dadurch gekennzeichnet,**
**dass** die Probengaszuleitung (13) sich entlang der Längsachse (L) des Ionisierungsraumes (14) erstreckt.

5. Ionenmobilitätsspektrometer nach einem der Ansprüche 1 bis 4,
**dadurch gekennzeichnet,**
**dass** der rohrförmige Ionisierungsraum (4) zum dem Ionengitter (3) abgewandten Ende hin konisch zulaufend ausgebildet ist.

6. Messeinrichtung mit einem Ionenmobilitätsspektrometer (1) nach einem oder mehreren der Ansprüche 1 bis 5 und mit einer mit dem Probengaseinlass (6) des Ionenmobilitätsspektrometers (1) verbundenen gaschromatographischen Vortrennung (12).

## Claims

1. Ion mobility spectrometer comprising a tubular ionization chamber (4) having a sample gas inlet (6) and a gas outlet (7), and having an ionization device (9) arranged within the ionization chamber (4), as well as a tubular drift chamber (5) which is separated from the ionization chamber (4) by an ion gate (3), wherein the drift chamber (5) has, at the end facing away from the ion gate (3), an ion detector (10) and a drift gas inlet (8), wherein the ionization device (9) is arranged at the front side (14a) of a cylindrical flow body (14) arranged in the ionization chamber (4), or of a flow body (14) tapering conically starting from the ionization device (9), which produces the third-gas flow guidance,
**characterized in that**
the ionization device (9) has a planar contact surface (9a) which is aligned parallel to and at a small distance from the ion gate (3) transverse to the longitudinal axis (L) of the ionization chamber (4), wherein the sample gas inlet (6) has a sample gas supply line (13), the sample discharge end (13a) of which opens directly in the region of the contact surface (9a) of the ionization device (9).

2. Ion mobility spectrometer according to claim 1,
**characterized in that**
a flow controller (15, 16) for controlling the respective volume flow is assigned to each of the sample gas inlet (6) and the drift gas inlet (8).

3. Ion mobility spectrometer according to claim 1 or 2,
**characterized in that**
the sample gas supply line (13) is integrated into the flow body (14).

4. Ion mobility spectrometer according to claim 3,
**characterized in that**
the sample gas supply line (13) extends along the longitudinal axis (L) of the ionization chamber (14).

5. Ion mobility spectrometer according to one of claims 1 to 4,
**characterized in that**
the tubular ionization chamber (4) is formed tapering conically toward the end facing away from the ion gate (3).

6. Measuring device comprising an ion mobility spectrometer (1) according to one or more of claims 1 to 5, and a gas-chromatographic pre-separation (12) connected to the sample gas inlet (6) of the ion mobility spectrometer (1).

## Revendications

1. Spectromètre de mobilité ionique comprenant une chambre d'ionisation tubulaire (4) avec une entrée de gaz d'échantillon (6) et une sortie de gaz (7), et avec un dispositif d'ionisation (9) disposé à l'intérieur de la chambre d'ionisation (4), ainsi qu'une chambre de dérive tubulaire (5), laquelle est séparée de la chambre d'ionisation (4) par une grille ionique (3), la chambre de dérive (5) présentant, à l'extrémité opposée à la grille ionique (3), un détecteur d'ions (10) et une entrée de gaz de dérive (8), le dispositif d'ionisation (9) étant disposé sur la face frontale (14a) d'un corps d'écoulement (14) disposé dans la chambre d'ionisation (4), de forme cylindrique ou se rétrécissant de manière conique à partir du dispositif d'ionisation (9), lequel assure le guidage du troisième gaz,
**caractérisé en ce que**
le dispositif d'ionisation (9) présente une surface de contact plane (9a), laquelle est orientée parallèlement et à faible distance de la grille ionique (3), transversalement à l'axe longitudinal (L) de la chambre d'ionisation (4), l'entrée de gaz d'échantillon (6) comprenant une conduite d'alimentation en gaz d'échantillon (13), dont l'extrémité de sortie d'échantillon (13a) débouche directement dans la zone de la surface de contact (9a) du dispositif d'ionisation (9).

2. Spectromètre de mobilité ionique selon la revendication 1,
**caractérisé en ce que**
un régulateur de débit (15, 16) destiné à réguler le débit volumique respectif est associé respectivement à l'entrée de gaz d'échantillon (6) et à l'entrée de gaz de dérive (8).

3. Spectromètre de mobilité ionique selon la revendication 1 ou 2,
**caractérisé en ce que**
la conduite d'alimentation en gaz d'échantillon (13) est intégrée dans le corps d'écoulement (14).

4. Spectromètre de mobilité ionique selon la revendication 3,
**caractérisé en ce que**
la conduite d'alimentation en gaz d'échantillon (13) s'étend le long de l'axe longitudinal (L) de la chambre d'ionisation (14).

5. Spectromètre de mobilité ionique selon l'une quelconque des revendications 1 à 4,
**caractérisé en ce que**
la chambre d'ionisation tubulaire (4) est réalisée en se rétrécissant de manière conique vers l'extrémité opposée à la grille ionique (3).

6. Dispositif de mesure comprenant un spectromètre de mobilité ionique (1) selon une ou plusieurs des revendications 1 à 5, et une pré-séparation chromatographique en phase gazeuse (12) reliée à l'entrée de gaz d'échantillon (6) du spectromètre de mobilité ionique (1).
